(19) Europäisches Patentamt
European Patent Office
Office européen des brevets

(11) Veröffentlichungsnummer : **0 330 068 B1**

(12) # EUROPÄISCHE PATENTSCHRIFT

(45) Veröffentlichungstag der Patentschrift :
**09.09.92 Patentblatt 92/37**

(51) Int. Cl.$^5$ : **C09K 19/00,** C10M 101/00

(21) Anmeldenummer : **89102622.1**

(22) Anmeldetag : **16.02.89**

(54) **Mechanisches Bauelement.**

Verbunden mit 89902761.9/0364520 (europäische Anmeldenummer/Veröffentlichungsnummer) durch Entscheidung vom 15.10.91.

(30) Priorität : **26.02.88 DE 3806055**
**29.03.88 DE 3810626**
**29.06.88 DE 3821855**
**12.08.88 DE 3827351**

(43) Veröffentlichungstag der Anmeldung :
**30.08.89 Patentblatt 89/35**

(45) Bekanntmachung des Hinweises auf die Patenterteilung :
**09.09.92 Patentblatt 92/37**

(84) Benannte Vertragsstaaten :
**AT DE ES FR GB IT NL SE**

(56) Entgegenhaltungen :
**EP-A- 0 092 682**
**EP-A- 0 199 211**
**CHEMICAL ABSTRACTS, Band 110, Nr. 3, 3. April 1989, Zusammenfassung Nr. 11917k, Columbus, Ohio, US; R. EIDENSCHINK: "Liquidcrystals in variable friction devices", & ANGEW. CHEM. 1988, 100(11), 1639-40**

(73) Patentinhaber : **MERCK PATENT GESELLSCHAFT MIT BESCHRÄNKTER HAFTUNG**
**Frankfurter Strasse 250 Postfach 4119**
**W-6100 Darmstadt (DE)**

(72) Erfinder : **Eidenschink, Rudolf, Dr.**
**Gaustrasse 50 a**
**W-6501 Bodenheim (DE)**

**EP 0 330 068 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein mechanisches Bauelement aus gegeneinander beweglichen, durch eine fluide organische Masse voneinander getrennten festen Körpern oder Teilen von Körpern, das es gestattet, durch Änderung der molekularen Ordnung in der organischen Masse die zwischen den Körpern wirksamen Reibungskräfte zu verändern.

Die Bewegung fester Körper innerhalb von Maschinen sowie die Bewegung einer Maschine gegenüber einer festen Unterlage werden mitbestimmt durch die Reibung, die zwischen den beteiligten Körpern jeweils anzusetzen ist. Dabei ist grundsätzlich zu unterscheiden, ob die Körper aufeinander gleiten oder aufeinander abrollen. Die Größe der Gleitreibung ist davon abhängig, ob die Körper direkt aufeinander gleiten oder vollständig durch ein Schmiermittel voneinander getrennt sind. Im ersten Fall spricht man von trockener, im zweiten von flüssiger Reibung. Eine sog. halbflüssige Reibung tritt auf, wenn der Schmierfilm nicht vollständig ausgebildet ist. Gleitreibung erfolgt grundsätzlich auch in Wälzlagern zwischen den abrollenden Wälzkörpern und ihren Führungselementen.

Die Schmiervorgänge in Maschinen lassen sich bekanntermaßen in zwei Gruppen einteilen. Bei hydrodynamischer Schmierung entsteht die Tragfähigkeit in einem Schmierfilm in einer Spaltform relativ großer Abmessung. Die Reibung wird dann primär von der Temperaturabhängigkeit der Schmierstoffviskosität bestimmt. Bei elastohydrodynamischer Schmierung wird aus einer zunächst linienoder punktförmigen Berührung zweier elastischer Körper ein sehr kleiner Schmierspalt gebildet. Die Abplattung im sog. Hertzschen Kontaktbereich zusammen mit der Zunahme der Viskosität des Schmierstoffes mit dem Druck führt dazu, daß sich die gegeneinander bewegenden festen Körper nicht oder kaum direkt berühren. In der bisherigen Praxis sind zur Erzeugung ausreichend hoher Viskositäten sehr hohe Drücke, im Bereich von 1 bis 40 kbar, notwendig. Dagegen sind die in hydraulichen Vorrichtungen angewendeten Drücke viel zu niedrig, als daß eine wesentliche Änderung der Viskosität des Hydrauliköls und somit auch die Bewegungsabläufe auftreten könnte. Die Druckverhältnisse in Schmierstoffen und in hydraulichen Ölen sind beschrieben (Dubbel, Taschenbuch für den Maschinenbau, Springer-Verlag, Berlin).

Es ist elementar, die Reibungsverluste in Lagern durch die Wahl eines geeigneten Schmiermittels gering zu halten. Es sind heute eine Vielzahl flüssiger Schmierstoffezumeist sind es organische Verbindungen - in Gebrauch. Ebenso elementar ist es durch Auswahl der Werkstoffe für eine hohe Reibungskraft zu sorgen, wenn ein Kupplungsoder Bremsvorgang ermöglicht werden soll. Die grundsätzliche Möglichkeit, durch Variation der Viskosität die Funktion eines mechanischen Bauteiles zu ändern - etwa von der eines Gleitlagers in die einer Kupplung -, bietet die Elektrorheologie. Dabei wird die Viskosität in Schichten aus kolloidalen Lösungen durch ein angelegtes elektrisches Feld verändert (J.E. Stangroom, Electrorheological Fluids, Phys. Technol., Bd. 14, S. 290-296 (1983)).

Manche organischen Verbindungen gehen beim Erwärmen nicht direkt von der kristallinen in die isotropflüssige Phase über, sondern durchlaufen innerhalb eindeutig begrenzter Temperaturbereiche eine oder mehrere zusätzliche Phasen.

Diese Phasen haben anisotrope physikalische Eigenschaften, wie es bei Kristallen beobachtet wird, sind aber zugleich fluide wie gewöhnliche isotrope Flüssigkeiten. Die von länglich geformten Moleküle gebildeten Phasen werden auch als rod-like oder calamitische Phase bezeichnet. Anders als in der völlig ungeordneten isotropen Phase herrscht hier eine Fernordnung der Orientierung. In den nematischen Phasen (Abk. N) bisher bekannter niedermolekularer Verbindungen können die Moleküle frei um ihre Längsachse rotieren. Eng verwandt mit der nematischen ist die cholesterische Phase, die von optisch aktiven langgestreckten Molekülen gebildet wird oder die durch Zugabe von optisch aktiven Verbindungen zu nematischen Verbindungen erhalten wird. Für die vorliegende Erfindung sind cholesterische Phasen im Begriff der nematischen Phase eingeschlossen. Durch intermolekulare Wechselwirkung können parallel ausgerichtete stäbchenförmige Moleküle zu Schichten zusammengefügt und diese mit jeweils gleichen Abständen im Raum angeordnet werden. Diese Schichtstruktur ist typisch für die smektischen Phasen. Es können verschiedene smektische Phasen auftreten, die sich durch die Anordnung ihrer Bausteine innerhalb der Schichten unterscheiden. Die Schwerpunkte der Moleküle innerhalb einer Schicht können statistisch (z.B. bei der $S_A$- und der $S_C$-Phase) oder regelmäßig (z.B. bei der $S_B$-Phase) angeordnet sein. Die Bezeichnung der Phasen erfolgte etwa in der Reihenfolge ihrer Entdeckung. Man kennt heute die smektischen Phasen $S_A$ bis $S_K$. Die Merkmale solcher calamitischer Phasen sind beschrieben (z.B. G.W. Gray, J.W. Goodby, Smectic Liquid Crystals, Leonard Hill, Glasgow (1984)). Flüssigkristalline Phasen können auch von tellerförmigen Verbindungen gebildet werden (sog. discoide Phasen). Die discoid-nematische Phase hat dabei die am einfachsten zu beschreibende Molekülan ordnung. In den sog. discoid-columnaren Phasen sind solche Moleküle durch intermolekulare Wechselwirkungen in säulenähnlichen Anordnungen zusammengefaßt. Die Merkmale discoitischer Phasen sind beschrieben z.B. in Mol. Cryst. Liq. Cryst. 106, 121 (1984). Seit kurzem sind Verbindungen bekannt geworden, die sog. phasmidischen Phasen, ebenfalls thermotrope flüssigkristalline Phasen, bilden (z.B. J. Malthete et al., J. Phys. (Paris) Lett., Bd. 46, 875 (1985)). Thermotrope flüssigkristalline Phasen werden auch von Polymeren und ihren Mischungen mit niedermolekularen Verbindungen gebildet (z.B. H. Finkelmannn in Thermotropic Liquid Crystals, John Wiley & Sons, New York (1987), S. 145-170). Die Ausnutzung der günstigen Viskosität innerhalb einer einzigen thermotropen flüssigkristallinen Phase für die Laufwerke von Uhren wurde bereits beschrieben (EP 0 092 389).

Es ist bekannt, daß die Übergänge zwischen den flüssigkristallinen Phasen vom Druck abhängig sind (z.B. G.M. Schneider et al., Physica 139 & 140 B, 616 (1986)). Die Abhängigkeit der Umwandlungstemperaturen zwischen den verschiedenen Phasen gehorchen der bekannten Gesetzmäßigkeit von Clausius-Clapeyron. Allgemein werden mit Druckerhöhung die Existenzbereiche der flüssigkristallinen Phasen zu höheren Temperaturen verschoben. Die Reihenfolge des Auftretens der Phasen bleibt meistens unverändert, es kann jedoch vorkommen, daß eine druckinduzierte Phase hinzukommt. So sind die Übergangstemperaturen z.B. für die Verbindung

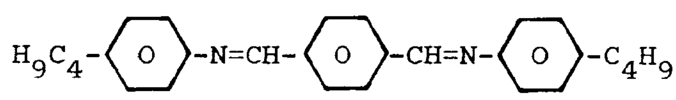

für Normaldruck $S_F$-$S_C$ 160 °C, $S_C$-$S_A$ 195 °C, $S_A$-I 204 °C, für 250 bar $S_F$-$S_C$ 171 °C, $S_C$-$S_A$ 204 °C, $S_A$-N 206 °C und N-I 208 °C. Es ist ferner bekannt, daß sich die die Viskosität bestimmenden zwischenmolekularen Wechselwirkungen bei solchen Übergängen ändern.

In dem Begriff Phasenübergang sind im Sinne des erfindungsmäßigen mechanischen Bauelements sog. Prätransitionale Phänomene (eng. pretransitional phenomena, beschrieben in: G. Vertogen, W.H. de Jeu, Thermotropic Liquid Crystals, Fundamentals, Springer-Verlag, Berlin 1988) eingeschlossen. Hierbei handelt es sich um Änderungen der molekularen Ordnung und somit von physikalischen Eigenschaften bei Änderung des Druckes oder der Temperatur noch vor Erreichen des Phasenüberganges, etwa bei Druckerhöhung vor dem Erreichen des Überganges von nematisch nach $S_B$. Von der Erfindung ist also ein mechanisches Bauelement erfaßt, das seine Reibungskraft durch eine herbeigeführte Änderung der Temperatur oder des Druckes in einer fluiden organischen Masse ändert, wenn diese Masse mindestens eine enantiotrope thermotrope flüssigkristalline Phase hat. Insbesondere ist ein solches Bauelement erfaßt, das bei Temperaturen betrieben wird, die 0,1 bis 30 °C oberhalb eines enantiotropen Überganges von einer flüssigkristallinen Phase in eine andere flüssigkristalline Phase oder von der isotropen Phase in eine flüssigkristalline Phase liegen.

Das erfindungsmäßige Bauelement erfordert die Herbeiführung eines Temperatur- oder Druckunterschiedes. Die Existensbereiche der beteiligten Phasen hängen neben dem Druck auch von der Temperatur ab, so daß Änderungen der Temperatur beim Betrieb berücksichtigt werden müssen.

Herkömmliche Schmierstoffe verändern ihre Viskosität in Abhängigkeit von der Temperatur bzw. vom Druck so geringfügig, daß es sehr hoher Temperaturunterschiede oder Drücke bedarf, um eine günstigte Veränderung in den Reibungseigenschaften zu erhalten. Deshalb ist die Anwendbarkeit dieser Abhängigkeit auf mechanische Bauelementewie Wälzlager, Wälzkupplungen und Zahnradgetriebe - mit relativ kleinen Berührungsflächen bei großen Andrückkräften und hoher Elastizität der Werkstoffe der beteiligten festen Körper begrenzt. Auch die elektrorheologischen Flüssigkeiten sind bisher nicht einsetzbar, weil sie zur Sedimentation neigen. Ferner unterliegen die bewegten Maschinenteile einem Abrieb. Allgemein ist die Realisierung hoher elektrischer Feldstärken zwischen beweglichen, elektrisch leitenden Maschinenteilen nicht einfach.

Der Erfindung liegt die Aufgabe zugrunde, in technisch einfacher Weise die Änderung der zwischen zwei gegeneinander bewegten festen Körpern wirksamen Reibungskraft zu ermöglichen.

Die Aufgabe wird erfindungsgemäß dadurch gelöst, daß zwischen die gegeneinander beweglichen Körper eines mechanischen Bauelements eine thermotrope flüssigkristalline Masse oder eine zur Ausbildung einer oder mehrere thermotroper flüssigkristalliner Phasen befähigte Masse gebracht wird und durch Änderung der Temperatur- oder der Druckverhältnisse innerhalb dieser Masse ein Phasenübergang zwischen verschiedenen thermotropen flüssigkristallinen Phasen oder zwischen einer thermotropen flüssigkristallinen Phase und der isotropen Phase (Abk. I) herbeigeführt wird. Erschwert wird die Aufgabe dadurch, daß die Reibungskräfte, die sich in komplizierter Weise strömenden, anisotropen Medien einstellen, nicht vorausberechenbar sind und nicht angebbar ist, welche der zahlreichen Viskositätskoeffizienten der jeweils beteiligten Phasen hierfür ausschlaggebend sind.

Es wurde überraschend gefunden, daß sich erfindungsmäßige Vorrichtungen mit Verbindungen oder Mischungen von Verbindungen mit einem Phasenübergang von einer isotropen zu einer smektischen Phase bzw. von einer discoid-columnaren zu einer discoid-nematischen Phase verwirklichen lassen. Hier sind die Übergänge I-$S_B$, I-$S_A$ I-$S_C$ und I-$S_E$ bevorzugt. Besonders bevorzugt ist der Übergang I-$S_B$.

Es wurde ferner gefunden, daß sich erfindungsmäßige Vorrichtungen mit Verbindungen und Mischungen von Verbindungen mit einem Phasenübergang von der nematischen in eine smektische Phase realisieren lassen. Bevorzugt sind Phasenübergänge N-$S_B$ und N-$S_A$. Besonders bevorzugt sind Verbindungen oder Mischungen mit einem Phasenübergang N-$S_B$.

Es wurde überraschend gefunden, daß sich erfindungsmäßige Vorrichtungen mit Verbindungen oder Mischungen von Verbindungen mit Phasenübergängen zwischen verschieden geordneten smektischen Phasen herstellen lassen. Bevorzugt sind die Übergänge $S_B$-$S_A$ und $S_C$-$S_A$. Besonders bevorzugt ist der Phasenübergang $S_B$-$S_A$.

Eingeschlossen in der vorliegenden Erfindung sind Bauelemente, die sich die mehrfach abgestufte Änderung der Reibungskraft zunutze machen, wenn bei steigender oder fallender Temperatur bzw. bei steigendem oder fallendem Druck in der fluiden Schicht mehrere Phasenumwandlungen hintereinander durchlaufen werden. Durch Auswahl der eingesetzten Verbindungen und die Wahl ihrer Anteile in Mischungen können Phasenfolge und Temperatur- bzw. Druckintervalle der Phasen in weiten Bereichen eingestellt werden. Bevorzugte Phasenabfolgen bei steigendem Druck sind N-$S_A$-$S_B$, I-$S_A$-$S_B$, N-$S_C$-$S_B$, I-$S_C$-$S_B$, I-$S_A$-$S_C$-$S_B$, N-$S_A$-$S_C$-$S_B$ und N-$S_A$-$S_C$-$S_G$.

Es wurde ebenfalls gefunden, daß sich erfindungsmäßige Vorrichtungen herstellen lassen, wenn die zwischen zwei gegeneinander beweglichen Körper befindliche organische Massen aus Verbindungen oder Mischungen von Verbindungen besteht, die einen Phasenübergang von einer isotropen oder discoid-nematischen Phase zu einer discoid-columnaren Phase haben. Bevorzugt sind dabei Verbindungen oder Mischungen mit Übergängen von einer isotropen zu einer discoid-columnaren Phase.

Ebenfalls eingeschlossen in der vorliegenden Erfindung sind Vorrichtungen, deren fluide organische Massen aus Verbindungen oder Mischungen aus Verbindungen bestehen, die sog. calamitische oder discoide Reentrant-Phasen bilden, also bei Temperatur- bzw. Druckerhöhung z.B. die Phasenabfolge N-$S_A$-N oder N-$S_A$-I durchlaufen, wobei der Existenzbereich z.B. der $S_A$-Phase oberhalb des Druckintervalls einer nematischen Phase liegt. Die Existenz solcher Flüssigkristalle ist beschrieben (z.B. L. Longa, W.H. de Jeu Phys. Rev. A26 1632 (1982)).

Es wurde auch gefunden, daß sich erfindungsmäßige mechanische Bauelemente mit Verbindungen der Formel I

$$R^1\text{-}A\text{-}(Z^1A^1)_1\text{-}(Z^2A^2)_m\text{-}(Z^3A^3)_n\text{-}R^2$$

worin

$R^1$ und $R^2$ jeweils eine unsubstituierte oder substituierte Alkylgruppe mit 1 bis 18 C-Atomen, worin auch eine oder zwei benachbarte $CH_2$-Gruppen durch -O-, -CO-, -CHOH-, -CHCN-, -OOC-, -COO-, -CH=CH-und/oder -C≡C- ersetzt sein können, eine Perfluoralkylgruppe mit 1 bis 12 C-Atomen, worin auch eine oder zwei $CF_2$-Gruppen durch -O-, -CHF-, -$CH_2$- und/oder -CHOH- und/oder eine $CF_3$-Gruppe durch -$CF_2H$ oder -$CH_2OH$ ersetzt sein können,

$R^2$ auch H, F, Cl, -CN oder -COOH,

A, $A^1$, $A^2$, $A^3$ jeweils unsubstituiertes oder durch ein bis zwei CN-Gruppen, F- oder Cl-Atome substituiertes 1,4-Phenylen, worin auch eine oder zwei CH-Gruppen durch N-Atome ersetzt sein können, 1,4-Cyclohexylen, worin auch eine oder zwei $CH_2$-Gruppen durch O-Atom oder CHF- oder $CF_2$-Gruppen ersetzt sein können und 1,4-Bicyclo[2. 2.2]octylen,

$Z^1$, $Z^2$, $Z^3$ jeweils -$CH_2CH_2$-, -$CH_2O$-, -$OCH_2$-, -COO-, -OOC-, -$CH_2CF_2$-, -$CF_2CF_2$-, -CH=N-, -CH=CH-, -C≡C- oder die Einfachbindung und

l, m, n jeweils 0 oder 1

bedeuten, sowie Mischungen von Verbindungen der Formel I oder Mischungen, die vorwiegend aus Verbindungen der Formel I bestehen, herstellen lassen.

Die Bedeutung der Abkürzungen $R^1$, $R^2$, A, $A^1$, $A^2$, $A^3$, $Z^1$, $Z^2$, m und n ist die oben aufgeführte. Die ringförmigen Strukturelemente der Formel I, A, $A^1$, $A^2$ und $A^3$ werden wie folgt vereinfacht: PE steht für eine 1,4-Phenylengruppe, CY für eine 1,4-Cyclohexylengruppe und BO für eine 1,4-Bicyclo[2.2.2]octylengruppe.

Die Verbindungen der Formel I umfassen also Verbindungen der Teilformeln Ia, Ib, Ic und Id

$$R^1\text{-}A\text{-}R^2 \quad \text{Ia}$$

$$R^1\text{-}A\text{-}Z^1\text{-}A^1\text{-}R^2 \quad \text{Ib}$$

$$R^1\text{-}A\text{-}Z^1\text{-}A^1\text{-}Z^2\text{-}A^2\text{-}R^2 \quad \text{Ic}$$

$$R^1\text{-}A\text{-}Z^1\text{-}A^1\text{-}Z^2\text{-}A^2\text{-}Z^3\text{-}A^3\text{-}R^2 \quad \text{Id}$$

Besonders bevorzugt sind Verbindungen der Formel Ib. In den Formeln Ib bis Id bedeuten die Gruppen $Z^1$ und $Z^2$ vorzugsweise Einfachbindungen oder -$CH_2CH_2$-.

Die Verbindungen der Formel Ia umfassen die bevorzugten Teilformeln Iaα und Iaß:

$$R^1\text{-}PE\text{-}R^2 \quad \text{I}a\alpha$$

$$R^1\text{-}CY\text{-}R^2. \quad \text{I}a\beta.$$

Formel Ib umfaßt die bevorzugten Teilformeln Ibα bis Ibγ:

$R^1$-PE-$Z^1$-PE-$R^2$ Ibα

$R^1$-CY-$Z^1$-CY-$R^2$ Ibβ

$R^1$BO-$Z^1$-BO-$R^2$. Ibγ.

Darunter sind die Verbindungen der Teilformel Ibß besonders bevorzugt.

Die Verbindungen der Formel Ic umfassen die der bevorzugten Teilformeln Icα bis Icϑ

$R^1$-CY-$Z^1$-PE-$Z^2$-PE-$R^2$ Icα

$R^1$-PE-$Z^1$-CY-$Z^2$-PE-$R^2$ Icβ

$R^1$-CY-$Z^1$-PE-$Z^2$-CY-$R^2$ Icγ

$R^1$-PE-$Z^1$-PE-$Z^2$-PE-$R^2$ Icδ

$R^1$-CY-$Z^1$-CY-$Z^2$-PE-$R^2$ Icε

$R^1$-CY-$Z^1$-CY-$Z^2$-CY-$R^2$ Icϑ

Darunter sind die Verbindungen der Teilformeln Icα, Icß und Icγ besonders bevorzugt.

Die Verbindungen der Formel Id umfassen die bevorzugten Teilformeln Idα bis Idδ:

$R^1$-PE-$Z^1$-PE-$Z^2$-PE-$Z^3$-PE-$R^2$ Idα

$R^1$-CY-$Z^1$-PE-$Z^2$-PE-$Z^3$-PE-$R^2$ Idβ

$R^1$-CY-$Z^1$-PE-$Z^2$-PE-$Z^3$-CY-$R^2$ Idγ

$R^1$-CY-$Z^1$-CY-$Z^2$-CY-$Z^3$-CY-$R^2$ Idδ

Darunter sind die Verbindungen der Teilformel Idß besonders bevorzugt.

Die Reste $R^1$ und $R^2$ sind vorzugsweise Alkyl und Alkoxy, für $R^2$ sind außerdem die Carbonitrilgruppe und die Carbonsäuregruppe bevorzugt.

A, $A^1$, $A^2$ und $A^3$ sind vorzugsweise CY, PE oder BO. Die Alkylreste in den Resten $R^1$ und $R^2$ können unverzweigt oder verzweigt sein. Vorzugsweise sind sie unverzweigt und bedeuten Methyl, Ethyl, Propyl, Butyl, Pentyl, Hexyl, Heptyl, Octyl, Nonyl, Decyl, Undecyl, Dodecyl, Tridecyl, Tetradecyl, Pentadecyl, Hexadecyl, Heptadecyl oder Octadecyl.

Die Verbindungen der Formel I sind teilweise bekannt, teilweise noch neu. Sie werden nach allgemein bekannten Methoden oder in Analogie zu diesen Methoden hergestellt. Sie sind beispielsweise der Reihe Houben-Weyl, Methoden der Organischen Chemie, Georg-Thieme-Verlag, Stuttgart, zu entnehmen.

Verbindungen der Formel I können eines oder mehrere asymmetrische C-Atome enthalten. In diesem Fall werden von der Formel I neben optisch aktiven Enantiomeren auch Enantiomerengemische und Racemate umfaßt.

Es wurde ebenfalls gefunden, daß sich ein mechanisches Bauelement mit veränderbarer Reibungskraft herstellen läßt, wenn zwischen die beweglichen Körper eine Masse gebracht wird, die mindestens eine Verbindung der Formel II enthält,

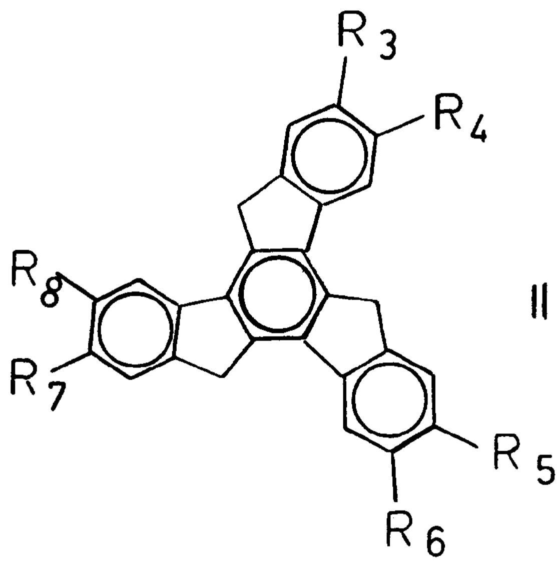

II

worin

$R_3$ bis $R_8$ unabhängig voneinander H, F, Cl, eine substituierte oder unsubstituierte Alkylgruppe mit 1 bis 18 C-Atomen, worin auch eine oder zwei nichtbenachbarte $CH_2$-Gruppen durch -O-, -CO-, -COO- oder -$CF_2$- ersetzt sein können, bedeuten.

Die Reste $R_3$ bis $R_8$ in Formel II sind vorzugsweise Alkanoyloxy, Alkoxy oder Alkyl.

Ein vorteilhafter Weg zu den Truxen-Derivaten der Formel II führt über geeignete Indan-1-one (C.R. Acad. Sci. Ser. C, 287, 545 (1978)). Die Verbindungen der Formel II sind teilweise noch nicht beschrieben. Sie werden nach diesem Syntheseweg und sonst allgemein bekannten Methoden hergestellt. Diese sind beispielsweise der Reihe Houben-Weyl, Methoden der Organischen Chemie, Georg-Thieme-Verlag, Stuttgart, zu entnehmen.

Die an sich stabilen Verbindungen der Formel I und II können zur Verlangsamung von Autoxidationsreaktionen, die bei Luftzutritt in bei hohen Temperaturen betriebenen mechanischen Bauelementen stattfinden, bis zu 1 Gewichtsprozent eines Antioxidants, wie Hydrochinon oder 2,6-Di-tert.-butyl-4-methylphenol enthalten.

Die Verbindungen der Formel I bzw. II werden als Einzelsubstanzen oder als Mischungen aus Verbindungen der Formeln I bzw. II verwendet.

Geeignete Mischungen enthalten 2 bis 10, vorzugsweise 2 bis 5 Verbindungen der Formel I und/oder II. Ebenfalls geeignete Mischungen können neben einer oder mehreren Verbindungen der Formel I bzw. II weitere Komponenten enthalten. Solche Mischungen enthalten 5 bis 99,9 Gewichtsprozent, vorzugsweise 30 bis 95 einer oder mehrerer Verbindungen der Formel I bzw. II. Die zusätzlichen Komponenten solcher Mischungen können cyclische und nichtcyclische Kohlenwasserstoffe, die einen bis fünf gleiche oder verschiedene Reste aus der Gruppe

$$-OH, -F, -Cl, -CN,$$

enthalten oder unsubstituiert sind, flüssigkristalline Haupt- oder Seitenkettenpolymere oder die o.g Antioxidantien sein.

Bevorzugt sind Verbindungen, die enantiotrop oder monotrop discotische Phasen ausbilden. Hierzu gehören sechsfach substituierte Derivate des Benzols, sechsfach substituierte Derivate des Triphenylens, sechsfach substituierte Derivate des Cyclohexans und Phthalocyanin-Derivate.

Günstig für die Anwendung von Verbindungen der Formel I bzw. II und ihren Mischungen in dem erfindungsmäßigen Maschinenelement ist die Tatsache, daß die Übergänge zwischen verschiedenen flüssigkristallinen Phasen sowie zwischen flüssigkristallinen Phasen und der isotropen Phase mit nur geringen zeitlichen Verzögerungen erfolgen. Metastabile Phasen durch Unterkühlung, wie sie beim Übergang von der flüssigen zur kristallinen Phase nichtmesomorpher Verbindungen auftreten, können also ausgeschlossen werden, wenn die Anordnung oberhalb der Kristallisationstemperatur betrieben wird. Diese Temperatur kann durch Verwendung von eutektischen oder nichteutektischen Mischungen von Verbindungen mit flüssigkristallinen Phasen ausreichend tief eingestellt werden. Ein weiterer günstiger Aspekt ist, daß bei den Phasenübergängen isotrop -flüssigkristallin oder flüssigkristallin - flüssigkristallin im Vergleich zu den Schmelzenthalpien nur geringe Übergangsenthalpien anzusetzen sind.

Die Wahl der Wärmezu- bzw. Wärmeabfuhr hängt von der Funktion der erfindungsgemäßen Vorrichtung innerhalb einer Maschine ab. Die Übertragung von Wärmeenergie von der Oberfläche der metallischen oder nichtmetallischen gegeneinander beweglichen Körper auf die fluide Schicht kann durch Konvektion mittels einer Flüssigkeit oder einem Gas erfolgen. Möglich ist ferner die Wärmezufuhr durch elektrische Widerstandsheizung, durch elektromagnetische Wellen, wenn mindestens einer der gegeneinander beweglichen Körper transparent ist, oder durch ein elektrisches Wechselfeld zwischen zwei elektrisch leitenden Körpern erfolgen. Die Abführung von Wärmeenergie aus der fluiden Schicht kann durch eine Kühlflüssigkeit oder ein Gas erfolgen. Auch die Abführung durch Wärmestrahlung allein ist möglich. Darüberhinaus kann in besonderen Fällen Wärmeenergie durch Peltier-Elemente abgeführt werden.

Wird in der unterhalb der jeweiligen Umwandlungstemperatur befindlichen Schicht ausreichende Reibungswärme erzeugt und dabei für eine schlechte Wärmeabführung gesorgt, so erfolgt die Phasenumwandlung ohne Heizung.

Die in der flüssigkristallinen Masse eines erfindungsmäßigen Maschinenelements auftretenden Reibungskräfte hängen von der Ausrichtung der Moleküle gegenüber der Richtung der Bewegung der festen Körper des Elements ab. Diese Ausrichtung kann durch Vorbehandlung der Körperoberflächen durch Reiben in einer Vorzugsrichtung oder durch Aufbringen einer dünnen Schicht aus einem organischen oder anorganischen Material beeinflußt werden.

Das erfindungsmäßige Maschinenelement kann als Kupplung, Bremse, mechanische Überlastungssicherung, hydraulisches Dämpfungselement oder Element zur hydraulischen Kraftübertragung (die beiden letzteren Maschinenelemente lassen sich unter dem Begriff hydraulische Vorrichtung zusammenfassen) verwendet werden. Ebenso ist eine Verwendung als Gleitlager mit einer für den vorgesehenen Anwendungszweck einstellbaren Abhängigkeit der Verlustreibung von der Temperatur möglich. Dies ist besonders vorteilhaft im Hinblick auf die Einsparung von mechanischer Energie, weil bei niederen Drehfrequenzen in einem Radial- oder Axiallager eine hohe effektive Viskosität und somit eine niedrigere Übergangsdrehfrequenz $n_ü$ von der halbflüssigen Reibung zur flüssigen Reibung gewählt werden kann. Wird die Drehfrequenz erhöht, so kann die Temperatur

durch die Reibungswärme allein oder durch zusätzliche Zuführung von Wärmeenergie so weit angehoben werden, daß ein Übergang zu einer Phase mit einer niedrigeren effektiven Viskosität erfolgt. Die Zusammenhänge zwischen Reibungsverlust, Viskosität und $n_{ü}$ sind bekannt (R. Stribeck, VDI-Zeitschr. Bd. 46, S. 1341 (1902)).

In einem erfindungsmäßigen Maschinenelement kann bei Anhebung des statischen Druckes im Schmierspalt eines Gleitlagers oder zweier gegeneinander beweglicher Metallscheiben durch drastische Viskositätszunahme - etwa bei einem Phasenübergang von nematisch nach $S_B$ - eine Bremswirkung erzielt werden. Hierbei kann der statische Druck in der organischen Masse von außen durch einen zusätzlichen Hydraulikkolben verändert werden. Voraussetzung ist die genügende Abdichtung des von der organischen Masse eingenommenen Raumes. Die Bremsleistung eines solchen Bauelements wird mitbestimmt durch die Wärmeabführung aus dem Schmierspalt.

Die Verwendung des erfindungsmäßigen mechanischen Bauelements als Kupplung ist auf die gleiche Weise realisierbar.

Eingeschlossen in die Erfindung ist ein mechanisches Bauelement, in welchem die Bewegungsabläufe durch die Druckabhängigkeit der Viskosität eines zu transportierenden Mediums mitbestimmt werden. Hierbei ermöglicht der Einsatz eines organischen Mediums mit einem oder mehreren druckabhängigen Übergängen zwischen flüssigkristallien Phasen oder einer flüssigkristallinen Phase und der isotropen flüssigen Phase die Herstellung eines hydraulischen Dämpfers, der Lasten aus sehr unterschiedlichen Größenordnungsbereichen aufnehmen kann, wobei je nach Phasenzugehörigkeit verschiedene Dämpfungskonstanten anzusetzen sind. Die Temperatur durch die Kompressionsarbeit an der fluiden organischen Masse ist für die Praxis von untergeordneter Bedeutung.

Ein erfindungsmäßiges mechanisches Bauelement ermöglicht die Herabsetzung von Verschleiß bei der reibschlüssigen Übertragung von Kräften. Hierbei wird die Tatsache ausgenutzt, daß bereits bei relativ geringen Anpreßdrücken eine Erhöhung der Viskosität und somit ein Übergang von Mischreibung zu Flüssigkeitsreibung auftritt, wenn bei Druckerhöhung ein Phasenübergang von nematisch oder isotrop nach $S_B$ oder $S_E$ erfolgt. Der Einsatz von Verbindungen der Formel I und ihren Mischungen in dem erfindungsmäßigen mechanischen Bauelement stellt eine Verbesserung von Getrieben dar, die sog. Traction-Fluids verwenden (vgl. O. Dittrich, VDI-Berichte 680, S. 201-219 (1988)).

Die Verbindungen der Formel I bzw. II und ihre Mischungen benetzen Metalloberflächen und Keramikoberflächen in ausgezeichneter Weise.

Ein erfindungsmäßiges mechanisches Bauelement kann als Visko-Kupplung (W. Peschke, SAE Technical Paper Series, Nr. 860 386, Detroit (1986)) verwendet werden, wenn durch Druckerhöhung während des Kupplungsvorganges trotz der eintretenden Temperaturerhöhung gegenüber dem ausgekuppelten Zustand eine Viskositätszunahme oder auch eine nur geringe Viskositätszunahme erfolgt. Auf diese Weise können auch die Nachteile, die sich aus der Verwendung der schlecht benetzenden Silkonöle ergeben, vermieden werden.

Die vorliegende Erfindung ermöglicht in vorteilhafter Weise die Herbeiführung einer Änderung der zwischen zwei gegeneinander bewegten festen Körpern wirksamen Reibungskraft.Ein erfindungsmäßiges Maschinenelement zeichnet sich durch besonders einfachen und störungsunanfälligen Aufbau aus und benötigt keine, den Verschleiß fördernde kolloidalen Lösungen. Ferner läßt sich mit ihm eine beträchtliche Energieeinsparung erzielen. Die Verbindung der Formel I bwz. II und die mit ihnen hergestellten Mischungen sind hierzu wegen ihrer Stabilität und der Möglichkeit, mit ihnen innerhalb weiterer Temperaturbereiche geeignete Phasenübergänge einzustellen, hervorragend geeignet.

Die folgenden Beispiele sollen die Erfindung erläutern, ohne sie zu begrenzen. Das Reibungsmoment (Reibungskraft Hebelarm) ist dasjenige Drehmoment in N · m, das aufgewendet werden muß, um eine bestehende Drehbewegung aufrechtzuerhalten. Seine Bestimmung erfolgt über die Messung der Verlustleistung in der dem Fachmann bekannten Weise.

Beispiel 1

Ein mechanisches Bauelement (Fig. 1), dessen Funktion wahlweise die eines Gleitlagers oder die einer effektiven Bremse sein kann, besteht aus einer ummantelten und temperierbaren Schliffhülse (1) aus Duranglas und einer auf einer Länge von 70 mm geführten Welle (2) mit einem Durchmesser von 10 mm, ebenfalls aus Duranglas (Hersteller Schott Glaswerke, Mainz). Die Welle wird über ein Stück dickwandigen Gummischlauch (3) mit einem Antriebsaggregat verbunden (in Fig. 1 nicht aufgeführt), das mit einer Meßvorrichtung ausgestattet ist, die die auf das Maschinenelement entfallende Verlustleistung in Abhängigkeit von der Drehfrequenz der Welle zu messen gestattet. (4) ist ein Haltevorrichtung. Vor Inbetriebnahme werden die getrennten Schliffelemente mit heißer Luft erwärmt und mit einer ausreichenden Menge von

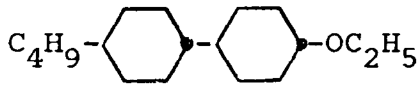

trans,trans-4-Ethoxy-4'-butyl-bicyclohexyl
(Übergang $S_B$ nach isotrop bei 51 °C)

bestrichen, so daß sich beim Zusammenführen ein luftblasenfreier Film auf der gesamten Reibungsfläche bildet. Durch den Mantel wird Paraffinöl mit einer Temperatur von 56 °C geleitet und die Welle mit 1 Hz gedreht. Das Reibungsmoment der Gleitvorrichtung ergibt sich zu $4.10^{-4}$ N·m. Nun wird Paraffinöl mit einer Temperatur von 44 °C mit einer Strömungsgeschwindigkeit von 5 ml.$s^{-1}$ eingespeist. Nach 30 s wird ein Reibungsmoment von $2.10^{-1}$ N·m gemessen. Nach Anheben der Öltemperatur auf 56 °C stellt sich der ursprüngliche Wert des Reibungsmomentes wieder ein. Analog werden verwendet (Angabe der Temperaturen, die zur Änderung des Reibungsmomentes durchlaufen werden müssen, in °C):

| | |
|---|---|
| trans,trans-4-Methoxy-4'-pentyl-bicyclohexyl | 29 |
| trans,trans-4,4'-Dipentyl-bicyclohexyl | 110 |
| trans,trans-4-(2-Cyanoethyl)-4'-pentyl-bicyclohexyl | 30/109 |
| trans,trans-4-(2-Cyanobutyl)-4'-pentyl-bicyclohexyl | 80 |

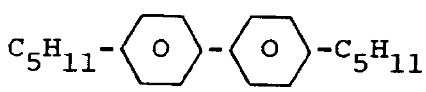

| | |
|---|---|
| 4,4'-Dipentyl-biphenyl | 52 |
| 4-Heptyl-4'-propyl-biphenyl | 51 |
| 4-Hexyl-4'-hexyloxy-biphenyl | 68/ 84 |
| 4'-Octyloxy-biphenyl-4-carbonsäureethylester | 88/ 96/112 |
| 4-Pentyl-4'-(propinyl)-1-biphenyl | 83 |
| 4'-Decyl-biphenyl-4-carbonsäure | 247 |

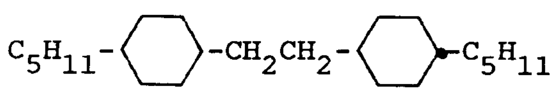

| | |
|---|---|
| 1,2-Bis[trans-4-pentylcyclohexyl]ethan | 109 |
| 1,2-Bis[trans-4-ethylcyclohexyl]ethan | 29 |

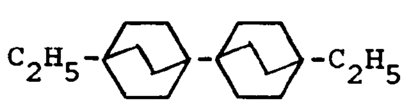

| | |
|---|---|
| 4,4'-Diethyl-bicyclo[2.2.2]octan | 209 |

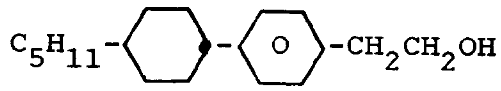

4-trans-(4-Pentylcyclohexyl)-2-hydroxyethyl-benzol 59/ 73

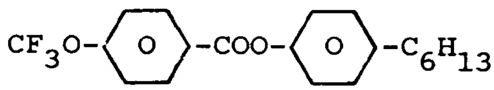

4-Hexylphenyl-4-trifluormethoxybenzoat 110

4-Heptadecafluoroctylphenyl-4-cyanophenyl-benzoat 145

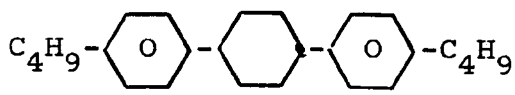

1,2-Bis[4-butylphenyl]cyclohexan 107

1,2-Bis[4-dodecylphenyl]cyclohexan 109

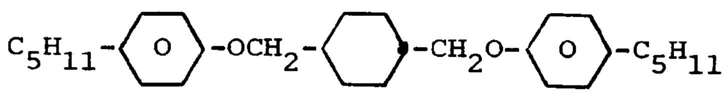

trans-1,4-Bis[4-pentylphenoxymethyl]cyclohexan

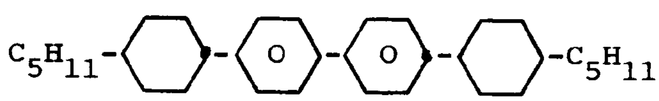

4,4'-Bis[trans-4-pentylcyclohexyl]biphenyl 247/275

Beispiel 2

Ein Gemisch aus 64,5 Gew.% 4,4′-Dipentyl-bicyclo[2.2.2]octan und 35,5 Gew.% 1,2-Bis[trans-4-pentylcyclohexyl]ethan hat eine Übergangstemperatur von 168 °C zwischen einer $S_B$- und einer I-Phase und kann in der in Beispiel 1 beschriebenen Weise zur thermischen Änderung des Reibungsmomentes herangezogen werden.

Beispiel 3

Ein Gemisch aus 42,2 Gew.% 4′-Hexyloxy-biphenyl-4-carbonitril und 57,8 Gew.% 4-(trans-4-Octylcyclohexyl)-1-(2-cyanoethenyl)benzol durchläuft beim Abkühlen die Phasenfolge N-$S_A$-N. In einem mechanischen Bauelement nach Beispiel 1 wird unterhalb von 19 °C ein kleineres Reibungsmoment gemessen als oberhalb dieser Temperatur.

Beispiel 4

Ein hydraulischer Dämpfer, bestehend aus einem oben und unten in der in Fig. 2 gezeigten Weise begrenzten Zylinder (1) mit einem lichten Durchmesser von 10 mm und einem in der aufgeschraubten kreisringförmigen Abdeckung (2) sowie an der Zylinderwand geführten 8 mm langen Kolben (3), der zwei die beiden Zylinderräume verbindende Bohrungen (4) von je 0,5 mm Durchmesser hat, wird fast vollständig mit der Verbindung

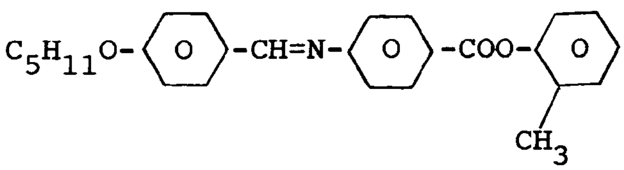

4-N-[4-Pentyloxy-benzylidenamin]-benzoesäure-[2-methyl-phenylester],

die eine Übergangstemperatur von der $S_A$- zur isotropen Phase von 53,5 °C hat, gefüllt und in ein Wasserbad gestellt, das den Zylinder mit Inhalt auf einer Temperatur von 51 °C hält. In der Stellung des oberen Anschlages wird der Kolben mit einer das Gewicht des Kolbens und der Führungsstange einschließenden Gesamtkraft von 2,0 N bewegt. Für den 30 mm langen Kolbenweg wird eine Zeit von 175 s benötigt. Wird die Temperatur der Anordnung auf 56 °C gesteigert, werden 4,2 s gemessen.

Die Dämpfungskonstanten der Vorrichtung haben demnach folgende Werte:

bei 51 °C $1{,}2 \cdot 10^4$ Ns/m
bei 56 °C $2{,}8 \cdot 10^2$ Ns/m.

Beispiel 5

Eine Kegelschliffhülse (1) und ein dazu passender Schliffkern (2), beide aus Duranglas (Normbezeichnung NS 29/32, DIN 12 249), sind die wesentlichen Teile einer erfindungsmäßigen Kupplung (Fig. 3). Die Hülse ist fest mit einer Hebevorrichtung (3) (in Fig. 3 nicht näher ausgeführt) verbunden, deren rotierende Teile ein Trägheitsmoment von $2{,}5 \cdot 10^{-4}$ $kgm^2$ haben und deren zu überwindendes Drehmoment 0,32 Nm beträgt. Der Kern ist Teil einer waagerecht liegenden, einseitig verschlossenen hohlen Welle (4) aus 2 mm starkem Duranglas, die in zwei Lagern (5) geführt und über ein Transmissionsband (6) durch einen Motor (6) ausreichender Leistung angetrieben werden kann. Vor Inbetriebnahme werden die getrennten Schliffelemente mit heißer Luft auf etwa 80 °C erwärmt und über die Fläche des Kerns 0,10 g der Verbindung

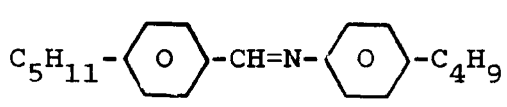

4-Butyl-N-[4-pentylbenzyliden]anilin

mit einem Phasenübergang von smektisch B nach nematisch bei 24 °C gleichmäßig verteilt, so daß sich beim Schieben in die Hülse unter Anwendung einer geringen Andrückkraft (0,5 bis 1 N) eine luftblasenfreie Schicht der organischen Verbindung bildet. Hierauf wird der Motor eingeschaltet und die Welle mit 10 Hz gedreht. Der Phasenübergang von nematisch nach smektisch wird dadurch herbeigeführt, daß durch eine in Fig. 3 skizzierte seitliche Zu führung (8) kurzzeitig Kühlwasser aus einem Reservoir (9) mit einer Temperatur, die im Sinne einer schnellen Wärmeabführung wenigstens 6 °C unterhalb der Übergangstemperatur liegt, mit einer ausreichenden Strömungsgeschwindigkeit eingespeist wird. Die Drehbewegung der Hebevorrichtung mit einer Frequenz von 10 Hz erfolgt nach einer Totzeit von weniger als 10 s innerhalb einer Beschleunigszeit von weniger als 5 s. Eine Entkuppelung erfolgt durch Einspeisen von Wasser aus einem Reservoir (10) mit einer Temperatur oberhalb der Übergangstemperatur über einen Dreiwegehahn (11). (12) ist eine Auffangrinne.

Beispiel 6

Die Anordnung des Beispiels 5 wird in der dort beschriebenen Weise mit der Verbindung

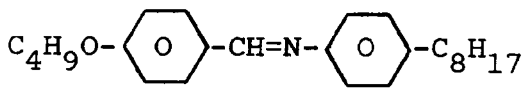

4-Octyl-N-[4-butyloxybenzyliden]anilin

betrieben, die eine Übergangstemperatur von smektisch B nach smektisch A von 49 °C hat. Auch hier kann durch Änderung der fluiden Schicht und einem damit verbundenen Phasenübergang zwischen einer Kupplung und einem Fehllauf gewählt werden.

Beispiel 7

Ein Radiallager besteht aus einer polierten Messingwelle (Durchmesser 15 mm) und einer thermostatisierbaren, ungeteilten Lagerschale aus Messing (tragende Lagerbreite 100 mm). Das Lagerspiel beträgt 0,01 mm, die Belastung des Lagers während des Betriebs beträgt 5,0 N. Auf die Gleitflächen wird etwas Lecithin gegeben, das mit Wolle zu einer dünnen gleichmäßigen Schicht verrieben wird. Daraufhin wird das erwärmte Lager in eine zusammenhängende Schicht der Verbindung

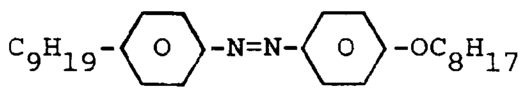

4-Octyloxy-4'-nonyl-azoxybenzol

mit einem Übergang von einer smektischen A Phase zu einer nematischen Phase bei 78 °C eingebettet. Bei einer Drehfrequenz von 10 Hz und einer Temperatur des Lagers von 73 °C ergibt sich eine Reibungszahl $\mu$ von 0,15, bei 81 °C und gleicher Drehfrequenz wird ein $\mu$ von 0,007 gemessen. $\mu$ wird in allgemein bekannter Weise durch das Drehmoment bestimmt, das aufgewendet werden muß, um die Bewegung mit einer bestimmten Drehfrequenz aufrechtzuerhalten.

Beispiel 8

Die Anordnung des Beispiels 5 wird in der dort beschriebenen Weise mit der Verbindung

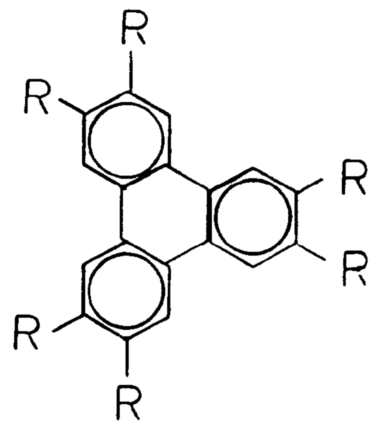

$R = -OC_{11}H_{23}$

2,3,6,7,10,11-Hexa-undecyloxy-triphenylen betrieben, die einen Übergang von einer discoid-columnaren zu einer isotropen Phasen bei 66 °C hat. Auch hier kann durch Änderung der Temperatur der fluiden Schicht und einem damit verbundenen Phasenübergang zwischen Kupplung und Freilauf gewählt werden.

Beispiel 9

Ein mechanisches Bauelement (Fig. 1) mit veränderbarem Reibungsmoment besteht aus einer ummantelten und temperierbaren Schliffhülse (1) aus Duranglas und einer auf einer Länge von 70 mm geführten Welle (2) mit einem Durchmesser von 10 mm, ebenfalls aus Duranglas (Hersteller Schott Glaswerke, Mainz). Die Welle wird über ein Stück dickwandigen Gummischlauch (3) mit einem Antriebsaggregat verbunden (in Fig. 1 nicht aufgeführt), das mit einer Meßvorrichtung ausgestatttet ist, die die auf das Maschinenelement entfallene Verlustleistung in Abhängigkeit von der Drehfrequenz der Welle zu messen gestattet. Vor Inbetriebnahme werden die getrennten Schliffelemente mit heißer Luft erwärmt und mit einer ausreichenden Menge von 2,3,7,8,12,13-Hexakis[decanoyloxy]truxen mit einem Übergang von discoid-nematisch nach columnar-discotisch bei 84 °C bestrichen, so daß sich beim Zusammenführen ein luftblasenfreier Film auf der gesamten Reibungsfläche bildet. Durch den Mantel wird Paraffinöl mit einer Temperatur von 82 °C geleitet und die Welle mit 1 Hz gedreht. Das Reibungsmoment der Gleitvorrichtung ergibt sich zu $3 \cdot 10^{-3}$ N·m. Nun wird Paraffinöl mit einer Temperatur von 95 °C mit einer Strömungsgeschwindigkeit von 5 $ml \cdot s^{-1}$ eingespeist. Nach 10 s wird ein Reibungsmoment von $9 \cdot 10^{-2}$ N·m gemessen. Nach Absenken der Öltemperatur auf 82 °C stellt sich der ursprüngliche Wert des Reibungsmomentes wieder ein.

Beispiel 10

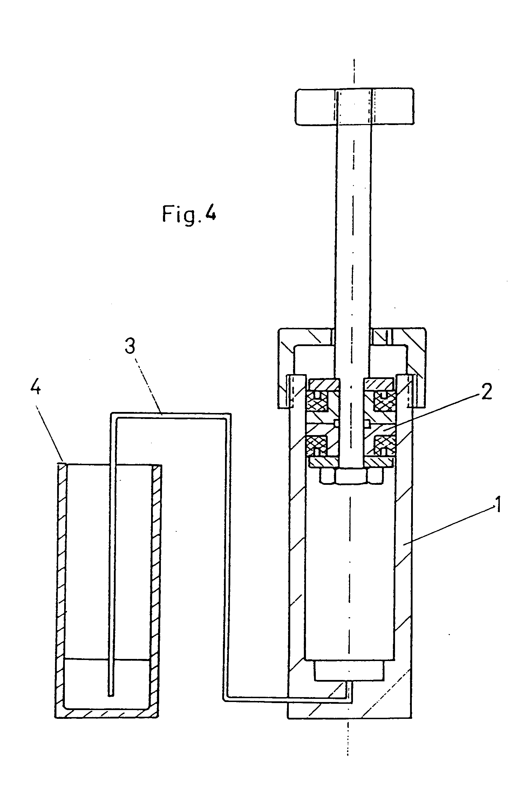

Ein hydraulischer Dämpfer (Fig. 4) zur Aufnahme von Kräften aus zwei sich in ihrer Größenordnung sehr unterscheidenden Belastungsbereichen besteht aus einem Stahlzylinder (1) mit einem lichten Durchmesser von 28 mm, einem darin beweglichen Hydraulikkolben (2) mit einem skizzierten - allgemein bekannten - Dichtungssystem und einer Rohrleitung (3) von insgesamt 250 mm Länge und 2,0 mm lichtem Durchmesser, die vom Kolbenraum in einen offenen Behälter (4) reicht. In Kolbenraum, Rohrleitung und Vorratsgefäß befindet sich ein zusammenhängendes, luftblasenfreies, von der Verbindung

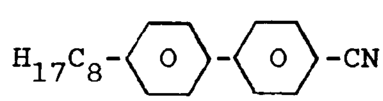

4'-Octyl-biphenyl-4-carbonitril

ausgefülltes Volumen. Diese Verbindung hat eine Übergangstemperatur zwischen der smektischen A zur nematischen Phase von 32,5 °C. Dem bei 35 ° befindlichen System wird nun eine Last von 12 000 N (Newton)

aufgegeben. Der Kolben benötigt für die Zurücklegung einer Strecke von 65 mm 3,0 s. Bei Aufgabe einer Last von nur 185 N und sonst gleichen Ausgangsbedingungen beträgt diese Zeit 3,5 s.

Beispiel 11

trans,trans-4-Methoxy-4′-pentyl-bicyclohexyl hat bei Normaldruck (1 bar) ein Übergangstemperatur von $S_B$ nach I von 29 °C. In der in Beispiel 10 gegebenen Anordnung unter den gleichen Bedingungen läßt sich mit dieser Verbindung bei hohen Drücken eine wesentlich höhere Dämpfungskonstante als bei Normaldruck erzielen.

## Patentansprüche

1. Mechanisches Bauelement aus mit veränderlicher Reibungskraft gegeneinander beweglichen, durch eine fluide organische Masse voneinander getrennten festen Körpern, dadurch gekennzeichnet, daß die Änderung der Reibungskraft durch Phasenübergänge zwischen verschiedenen thermotropen flüssigkristallinen Phasen oder zwischen einer thermotropen flüssigkristallinen Phase und einer isotropen Phase dieser fluiden organischen Masse herbeigeführt wird.

2. Mechanisches Bauelement nach Anspruch 1, dadurch gekennzeichnet, daß die Phasenübergänge durch Temperaturänderungen in der fluiden organischen Masse herbeigeführt werden.

3. Mechanisches Bauelement nach Anspruch 1, dadurch gekennzeichnet, daß die Phasenübergänge durch Änderungen des Druckes in der fluiden organischen Masse herbeigeführt werden.

4. Mechanisches Bauelement nach Anspruch 1-3, dadurch gekennzeichnet, daß ein Übergang zwischen einer smektischen und einer nematischen Phase herbeigeführt wird.

5. Mechanisches Bauelement nach Anspruch 1-3, dadurch gekennzeichnet, daß ein Übergang zwischen einer smektischen und der isotropen Phase herbeigeführt wird.

6. Mechanisches Bauelement nach Anspruch 1-3, dadurch gekennzeichnet, daß ein Übergang zwischen einer smektischen und einer anderen smektischen Phase herbeigeführt wird.

7. Mechanisches Bauelement nach Anspruch 1-3, dadurch gekennzeichnet, daß ein Übergang zwischen einer discoid-columnaren Phase und einer discoid-nematischen Phase herbeigeführt wird.

8. Mechanisches Bauelement nach Anspruch 1-3, dadurch gekennzeichnet, daß ein Übergang zwischen einer discoid-columnaren und der isotropen Phase herbeigeführt wird.

9. Mechanisches Bauelement nach Anspruch 1-3, dadurch gekennzeichnet, daß ein Übergang zwischen einer phasmidischen Phase und der isotropen Phase herbeigeführt wird.

10. Mechanisches Bauelement nach Anspruch 1-6, dadurch gekennzeichnet, daß die fluide organische Phase mindestens eine Verbindung der Formel I enthält

$$R^1\text{-}A\text{-}(Z^1A^1)_l\text{-}(Z^2A^2)_m\text{-}(Z^3A^3)_n\text{-}R^2 \qquad \text{I,}$$

worin,

$R^1$ und $R^2$ jeweils eine unsubstituierte oder substituierte Alkylgruppe mit 1 bis 18 C-Atomen, worin auch eine oder zwei benachbarte $CH_2$-Gruppen durch -O-, -CO-, -CHOH-, -CHCN-, -OOC-, -CO-, -CH=CH- und/oder -C≡C- ersetzt sein können, eine Perfluoralkylgruppe mit 1 bis 12 C-Atomen, worin auch eine oder zwei $CF_2$-Gruppen durch -O-, -CHF-, $-CH_2-$ und/oder -CHOH- und/oder eine $CF_3$-Gruppe durch $-CF_2H-$ oder $-CH_2OH$ ersetzt sein können,

$R^2$ auch H, F, Cl, -CN oder -COOH,

A, $A^1$, $A^2$, $A^3$ jeweils unsubstituiertes oder durch ein bis zwei CN-Gruppen, F- oder Cl-Atome substituiertes 1,4-Phenylen, worin auch eine oder zwei CH-Gruppen durch N-Atome ersetzt sein können, 1,4-Cyclohexylen, worin auch eine oder zwei $CH_2$-Gruppen durch O-Atom oder CHF- oder $CF_2$-Gruppen ersetzt sein können und 1,4-Bicyclo[2.2.2]-octylen,

$Z^1$, $Z^2$, $Z^3$ jeweils $-CH_2CH_2-$, $-CH_2O-$, $-OCH_2-$, -COO-, -OOC-, $-CH_2CF_2-$, $-CF_2CF_2-$, -CH=N-, -

CH=CH-, -C≡C- oder die Einfachbindung und
l, m, n jeweils 0 oder 1
bedeuten.

11. Mechanisches Bauelement nach Anspruch 10, dadurch gekennzeichnet, daß die fluide organische Masse ein Gemisch mehrerer Verbindungen der Formel I enthält.

12. Mechanisches Bauelement nach Anspruch 11, dadurch gekennzeichnet, daß die fluide organische Masse aus einem Gemisch besteht, dessen Gesamtanteil an Verbindungen der Formel I mindestens 5 Gewichtsprozent beträgt.

13. Mechanisches Bauelement nach einem der Ansprüche 1-3, 7 und 8, dadurch gekennzeichnet, daß die flüssigkristalline Masse mindestens eine Verbindung der Formel II enthält

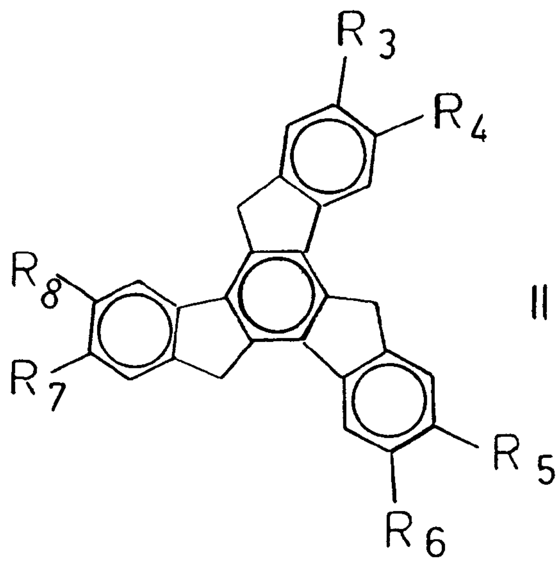

II

worin
$R_3$ bis $R_8$ unabhängig voneinander H, F, Cl eine substituierte oder unsubstituierte Alkylgruppe mit 1 bis 18 C-Atomen, worin auch eine oder zwei nichtbenachbarte $CH_2$-Gruppen durch -O-, -CO-, -COO- oder $-CF_2-$ ersetzt sein können, bedeuten.

14. Verwendung eines mechanischen Bauelements nach Anspruch 1 bis 13 als hydraulische Vorrichtung.

15. Verwendung des mechanischen Bauelements nach Anspruch 1 bis 13 als Bremse.

16. Verwendung des mechanischen Bauelements nach Anspruch 1 bis 13 als Kupplung.

17. Verwendung des mechanischen Bauelements nach Anspruch 1 bis 13 als Gleitlager.

18. Verwendung der Verbindungen der Formeln I und II als Komponenten flüssigkristalliner Phasen steuerbarer, mechanischer Bauelemente.

## Claims

1. Mechanical component consisting of solid bodies which are mobile relative to one another which are mobile relative to one another under a variable frictional force and are separated from one another by a fluid organic mass, characterized in that the change in frictional force is induced by phase transitions between different thermotropic liquid-crystalline phases or between a thermotropic liquid-crystalline phase and an isotropic phase of this fluid organic mass.

**2.** Mechanical component according to Claim 1, characterized in that the phase transitions are induced by temperature changes in the fluid organic mass.

**3.** Mechanical component according to Claim 1, characterized in that the phase transitions are induced by pressure changes in the fluid organic mass.

**4.** Mechanical component according to Claims 1 - 3, characterized in that a transition between a smectic phase and a nematic phase is induced.

**5.** Mechanical component according to Claims 1 - 3, characterized in that a transition between a smectic phase and the isotropic phase is induced.

**6.** Mechanical component according to Claims 1 - 3, characterized in that a transition between one smectic phase and another smectic phase is induced.

**7.** Mechanical component according to Claims 1 - 3, characterized in that a transition between a discoid-columnar phase and a discoid-nematic phase is induced.

**8.** Mechanical component according to Claims 1 - 3, characterized in that a transition between a discoid-columnar phase and the isotropic phase is induced.

**9.** Mechanical component according to Claims 1 - 3, characterized in that a transition between a phasmidic phase and the isotropic phase is induced.

**10.** Mechanical component according to Claims 1 - 6, characterized in that the fluid organic phase contains at least one compound of the formula I

$$R^1\text{-}A\text{-}(Z^1A^1)_1\text{-}(Z^2A^2)_m\text{-}(Z^3A^3)_n\text{-}R^2 \qquad I$$

wherein

$R^1$ and $R^2$ each are an unsubstituted or substituted alkyl group having 1 to 18 C atoms, in which one or two adjacent $CH_2$ groups can also be replaced by -O-, -CO-, -CHOH-, -CHCN-, -OOC-, -CO-, -CH=CH-and/or -C=C- or a perfluoro alkyl group having 1 to 12 C atoms, in which one or two $CF_2$ groups can also be replaced by -O-, -CHF-, $-CH_2-$ and/or -CHOH- and/or a $CF_3$ group can be replaced by $-CF_2H$ or $-CH_2OH$, and

$R^2$ can also be H, F, Cl, -CN or -COOH,

A, $A^1$, $A^2$, $A^3$ each are 1,4-phenylene which is unsubstituted or mono- to di-substituted by CN groups or F or Cl atoms and in which one or two CH groups can also be replaced by N atoms, 1,4-cyclohexylene in which one or two $CH_2$ groups can also be replaced by an O atom or CHF or $CF_2$ groups, and 1,4-bicyclo[2.2.2]octylene,

$Z^1$, $Z^2$, $Z^3$ each are $-CH_2CH_2-$, $-CH_2O-$, $-OCH_2-$, -COO-, -OOC-, $-CH_2CF_2-$, $-CF_2CF_2-$, -CH=N-, -CH=CH-, -C=C-or the single bond and

l, m, n are each 0 or 1.

**11.** Mechanical component according to Claim 10, characterized in that the fluid organic mass contains a mixture of a plurality of compounds of the formula I.

**12.** Mechanical component according to Claim 11, characterized in that the fluid organic mass consists of a mixture, in which the total content of compounds of the formula I is at least 5 per cent by weight.

**13.** Mechanical component according to one of Claims 1 - 3, 7 and 8, characterized in that the liquid-crystalline mass contains at least one compound of the formula II

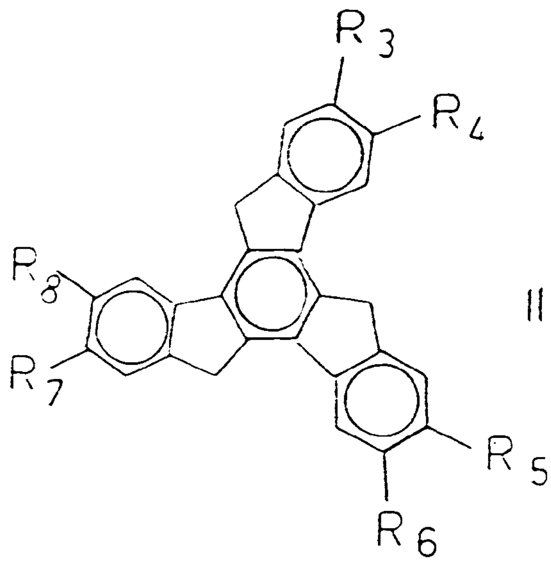

II

wherein

$R_3$ to $R_8$ independently of one another are H, F, Cl or a substituted or unsubstituted alkyl group having 1 to 18 C atoms, in which one or two non-adjacent $CH_2$ groups can also be replaced by -O-, -CO-, -COO- or $-CF_2-$.

**14.** Use of a mechanical component according to Claims 1 to 13 as a hydraulic device.

**15.** Use of a mechanical component according to Claims 1 to 13 as a brake.

**16.** Use of a mechanical component according to Claims 1 to 13 as a clutch.

**17.** Use of a mechanical component according to Claims 1 to 13 as a slide bearing.

**18.** Use of the compound of the formulae I and II as constituents of liquid-crystalline phases of controllable mechanical components.

## Revendications

**1.** Elément de construction mécanique formé de corps solides se mouvant l'un contre l'autre avec une force de frottement variable, séparés l'un de l'autre par une masse organique fluide, caractérisé en ce que la modification de la force de frottement est provoquée par des transferts de phases entre différentes phases à cristaux liquides thermotropes ou entre une phase à cristaux liquides thermotrope et une phase isotrope de cette masse organique fluide.

**2.** Elément de construction mécanique selon la revendication 1, caractérisé en ce que les transferts de phases sont provoqués par des modifications de température dans la masse organique fluide.

**3.** Elément de construction mécanique selon la revendication 1, caractérisé en ce que les transferts de phases sont provoqués par une modification de la pression dans la masse organique fluide.

**4.** Elément de construction mécanique selon les revendications 1-3, caractérisé en ce qu'on provoque un transfert de phases entre une phase smectique et une phase nématique.

**5.** Elément de construction mécanique selon les revendications 1-3, caractérisé en ce qu'on provoque une transition entre une phase smectique et la phase isotrope.

**6.** Elément de construction mécanique selon les revendications 1-3, caractérisé en ce qu'on provoque une transition entre une phase smectique et une autre phase smectique.

7. Elément de construction mécanique selon les revendications 1-3, caractérisé en ce qu'on provoque une transition entre une phase discoïde-colonnaire et une phase discoïde-nématique.

8. Elément de construction mécanique selon les revendications 1-3, caractérisé en ce qu'on provoque une transition entre une phase discoïde colonnaire et la phase isotrope.

9. Elément de construction mécanique selon les revendications 1-3, caractérisé en ce qu'on provoque une transition entre une phase phasmidique et la phase isotrope.

10. Elément de construction mécanique selon les revendications 1-6, caractérisé en ce que la phase organique fluide contient au moins un composé de formule I

$$R^1\text{-}A\text{-}(Z^1A^1)_1\text{-}(Z^2A^2)_m\text{-}(Z^3A^3)_n\text{-}R^2 \qquad I,$$

dans laquelle

$R^1$ et $R^2$ représentent à chaque fois un groupe alcoyle non substitué ou substitué en $C_{1-18}$, où également l'un des deux groupes $CH_2$ voisins peuvent être remplacés par -O-, -CO-, -CHOH-, -CHCN-, -OCC-, -CO-, -CH=CH-, et/ou -C≡C- un groupe perfluoroalcoyle en $C_{1-12}$, où encore un ou deux groupes $CH_2$ peuvent être remplacés par -O-, -CHF-, $-CH_2-$ et/ou -CHOH-, et/ou un groupe $CF_3$ par $-CF_2H-$ ou $-CH_2OH$,

$R^2$ représente également H, F, Cl, -CN ou -COOH,

A, $A^1$, $A^2$, $A^3$ représentent chacun un 1,4-phénylène non-substitué ou substitué par un à deux groupes CN, atomes de F ou de Cl, ou encore un ou deux groupes CH peuvent être remplacés par des atomes de N, un 1,4-cyclohexylène, où encore un ou deux groupes $CH_2$ peuvent être remplacés par un atome de O ou des groupes CHF ou $CF_2$, et un 1,4-bicyclo[2.2.2]-octylène,

$Z^1$, $Z^2$, $Z^3$ représentent à chaque fois $-CH_2CH_2-$, $-CH_2O-$, $-OCH_2-$, -COO-, -OOC-, $-CH_2CF_2-$, $-CF_2CF_2-$, -CH=N-, -CH=CH-, -C≡C- ou la liaison simple, et

l, m, n valent chaque fois 0 ou 1.

11. Elément de construction mécanique selon la revendication 10, caractérisé en ce que la masse organique fluide contient un mélange de plusieurs composés de formule I.

12. Elément de construction mécanique selon la revendication 11, caractérisé en ce que la masse organique fluide se compose d'un mélange dont la teneur totale en composés de formule I s'élève à au moins 5% en poids.

13. Elément de construction mécanique selon l'une des revendications 1-3, 7 et 8, caractérisé en ce que la masse à cristaux liquides contient au moins un composé de formule II

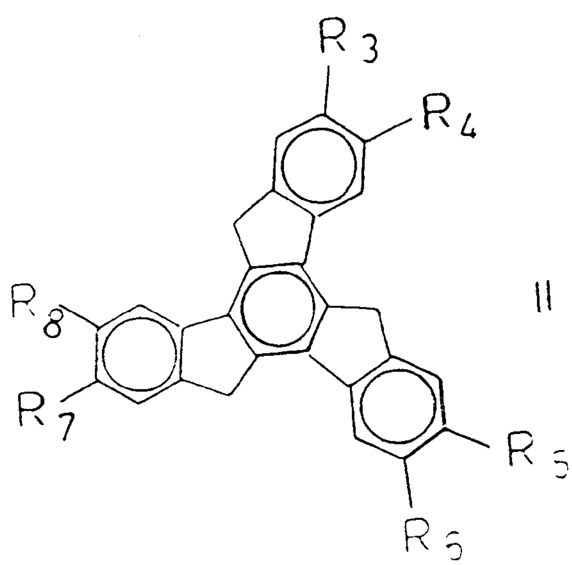

II

dans laquelle $R_3$ à $R_8$ représentent indépendamment l'un de l'autre H, F, Cl, un groupe alcoyle substitué ou non-substitué en $C_{1-18}$, ou encore un ou deux groupes $CH_2$ non voisins peuvent être remplacés par

-O-, -CO-, -COO-, ou $-CF_2-$.

14. Application d'un élément de construction mécanique selon les revendications 1 à 13 comme dispositif hydraulique.

15. Application de l'élément de construction mécanique selon les revendications 1 à 13 comme frein.

16. Application de l'élément de construction mécanique selon les revendications 1 à 13 comme embrayage.

17. Application de l'élément de construction mécanique selon les revendications 1 à 13 comme palier glisseur.

18. Application du composé de formules I et II comme composants de phases à cristaux liquides d'élément de construction mécanique réglable.

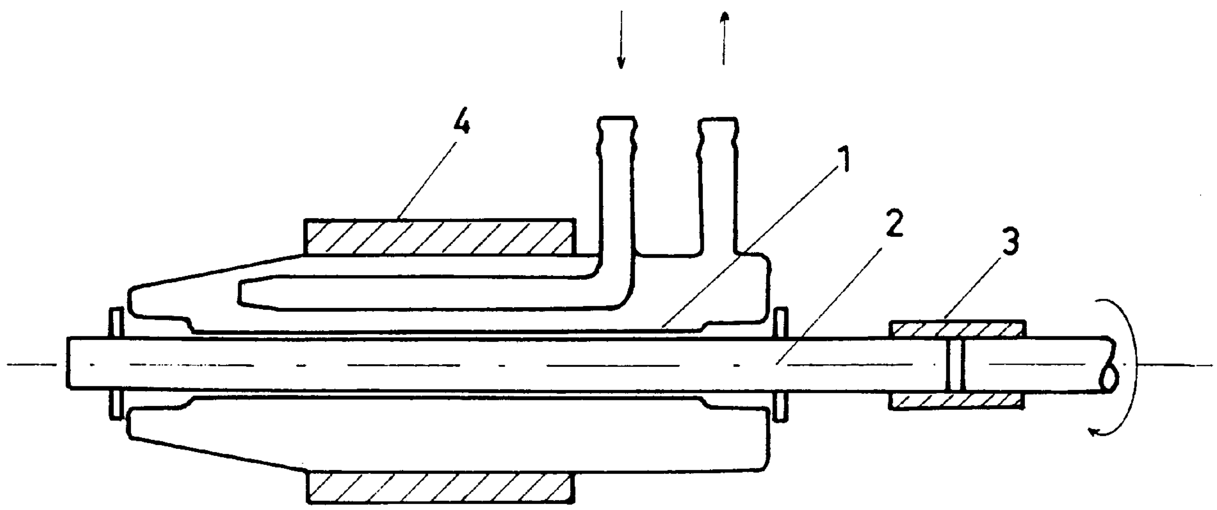


Fig.1

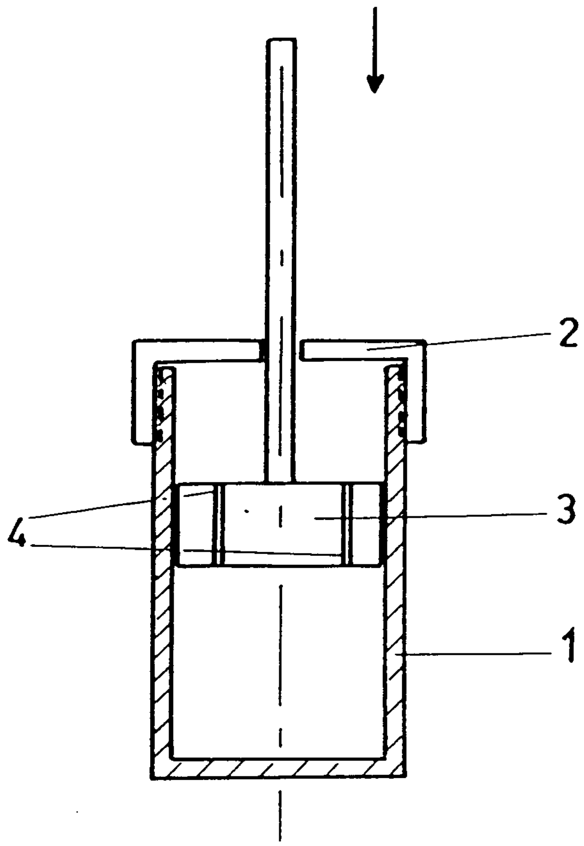


Fig.2

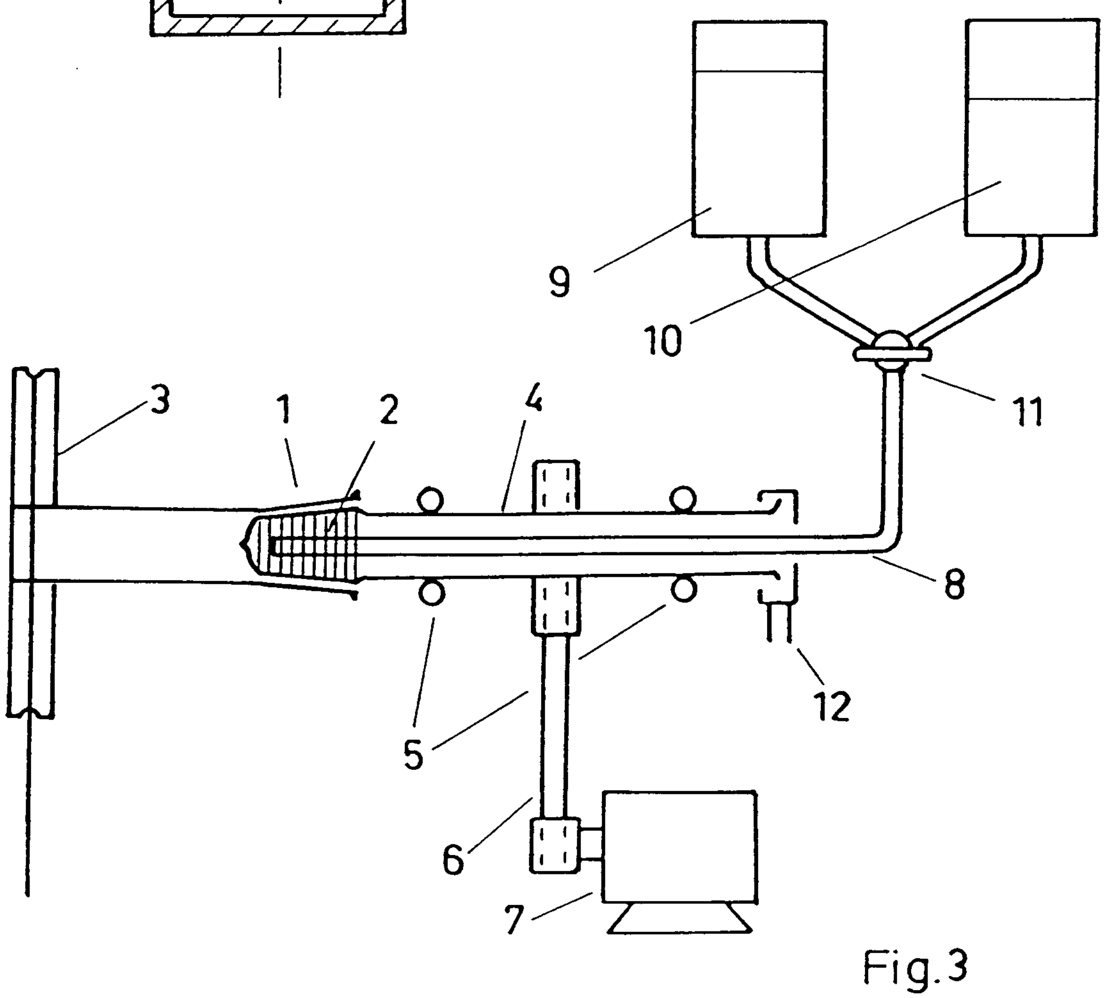


Fig.3

Fig. 4